(19) Europäisches Patentamt / European Patent Office / Office européen des brevets

(11) **EP 1 529 021 B1**

(12) # EUROPÄISCHE PATENTSCHRIFT

(45) Veröffentlichungstag und Bekanntmachung des Hinweises auf die Patenterteilung:
**24.11.2010 Patentblatt 2010/47**

(21) Anmeldenummer: **03784062.6**

(22) Anmeldetag: **24.07.2003**

(51) Int Cl.:
***C04B 35/593*** (2006.01)        ***C04B 35/486*** (2006.01)
***F16C 33/30*** (2006.01)

(86) Internationale Anmeldenummer:
**PCT/EP2003/008143**

(87) Internationale Veröffentlichungsnummer:
**WO 2004/014817 (19.02.2004 Gazette 2004/08)**

(54) **KERAMISCHER WERKSTOFF HOHER STOSSFESTIGKEIT**

HIGHLY SHOCK-RESISTANT CERAMIC MATERIAL

MATERIAU CERAMIQUE PRESENTANT UNE GRANDE RESISTANCE AUX CHOCS

(84) Benannte Vertragsstaaten:
**AT BE BG CH CY CZ DE DK EE ES FI FR GB GR HU IE IT LI LU MC NL PT RO SE SI SK TR**

(30) Priorität: **06.08.2002 DE 10235965**

(43) Veröffentlichungstag der Anmeldung:
**11.05.2005 Patentblatt 2005/19**

(73) Patentinhaber: **H.C. Starck Ceramics GmbH & Co. KG**
**95100 Selb (DE)**

(72) Erfinder:
• **WÖTTING, Gerhard**
  **96450 Coburg (DE)**
• **CASPERS, Bernhard**
  **38690 Vienenburg (DE)**
• **HENNICKE, Jürgen**
  **96472 Rödental (DE)**
• **THOMA, Hans-Jürgen**
  **96472 Rödental (DE)**
• **FRASSEK, Lutz**
  **96472 Rödental (DE)**

(74) Vertreter: **Clauswitz, Kai-Uwe Wolfram et al**
  **H.C. Starck GmbH**
  **Patentabteilung**
  **Postfach 25 40**
  **38615 Goslar (DE)**

(56) Entgegenhaltungen:
**DE-A- 4 422 566          US-A- 4 205 033**
**US-A- 5 508 241          US-A- 5 902 761**
**US-A1- 2001 027 681**

• **PATENT ABSTRACTS OF JAPAN vol. 1999, no. 05, 31. Mai 1999 (1999-05-31) -& JP 11 043372 A (SUMITOMO ELECTRIC IND LTD), 16. Februar 1999 (1999-02-16)**
• **PATENT ABSTRACTS OF JAPAN vol. 014, no. 456 (C-0765), 2. Oktober 1990 (1990-10-02) -& JP 02 180754 A (HITACHI METALS LTD), 13. Juli 1990 (1990-07-13)**

EP 1 529 021 B1

**Beschreibung**

Keramische Werkstoffe finden zunehmend Einsatz in allen Bereichen der Technik, bei denen konventionelle Werkstoffe an Leistungsgrenzen stoßen. Dies trifft auch auf den Bereich der Lagertechnik zu, wobei insbesondere bei Wälzlagern Siliciumnitrid ($Si_3N_4$)-Wälzkörper eine Vielzahl von Vorteilen gegenüber metallischen Wälzkörpern aufweisen. Auch Zirkondioxid ($ZrO_2$)-Wälzkörper sind von Interesse, da $ZrO_2$ eine Wärmedehnung ähnlich wie Wälzlagerstähle aufweist und es dadurch zu keinen konstruktiven Auslegungsproblemen bei höheren Temperaturen kommt.

Ein Problem bezüglich dieser Wälzkörper besteht darin, dass deren Stoßfestigkeit (Impact Strength) begrenzt ist und es somit bei der Herstellung oder bei der Anwendung der hochpräzisen Lagerkomponenten, insbesondere von Lagerkugeln, zu Schädigungen kommen kann, wie sie z.B. von Hadfield in "Failure of Silicon Nitride Rolling Elements with Ring Crack Defekts in: Ceramics International 24 (1998), 379-386" sowie von Cundill in "Impact Resistance of Silicon Nitride Balls, in: Proc. 6th Int. Symp. on Ceramic Materials and Components for Engines, Arika, Japan, 1997, 556-561" beschrieben werden. Dabei bilden sich sichelförmige Oberflächen risse, sogenannte C-Risse, aus, die im weiteren Einsatz unter Last wachsen und zu Abplatzern führen können mit der Folge massiver Lagerschädigungen. Derartige Defekte sind naturgemäß unerwünscht.

Dichtes, weitgehend poren- und defektfreies Siliciumnitrid zeichnet sich aufgrund der Kombination günstiger mechanischer Eigenschaften im Vergleich zu sonstigen keramischen Werkstoffen durch eine vergleichsweise hohe Stoßfestigkeit aus. Wie jedoch Hadfield und Cundill zeigen, sind auch in kommerziell verfügbaren, u.a. durch heißisostatisches Pressen hergestellten Siliciumnitrid-Varianten C-Risse zu finden, die bei Belastung zur Rissbildung und damit zum frühzeitigen Versagen führen können, was die Empfindlichkeit hinsichtlich derartiger Schädigungen verdeutlicht.

JP 11 043372 A offenbart ein Verfahren unter Zusatz von Kohlenstoff, eine Sinterung bei Normaldruck und einer Zeit von weniger als einer Stunde und zeigt in den Bei-spielen eine Probe mit einem Gehalt von 16% Kohlenstoff und einer Biegefestigkeit von 750 MPa, bei einem Kohlenstoffgehalt von 54% beträgt die Biegefestigkeit 400 MPa ohne Härten oder Elastizitätsmoduln zu offenbaren.

JP 02 180754 beschreibt Maßnahmen zur Reduktion der Reibung und des elektrischen Widerstandes von auf Zirkondioxid basierenden Werkstoffen. Erwähnt werden Zusätze von $Al_2O_3$ und insbesondere TiC, von denen bekannt ist, dass sie den Elastizitätsmodul von Zirkondioxid erhöhen.

Der in DE4422566 offenbarten Lehre liegt die Aufgabe zugrunde, bezüglich der HT-Festigkeit verbesserte Siliziumnitrid-Werkstoffe bereitzustellen. Dies wird durch die Desoxidation des Siliziumnitrid-Werkstoffes durch Kohlenstoffzusatz bewirkt. Durch Erhitzen auf eine Temperatur von über 400 bzw. 800 °C wird die Desoxidation bewirkt.

US2001027681 offenbart ein Verfahren zur Herstellung von Schneidwerkzeugen und die damit erhaltenen Produkte. Es wird bei Drücken von 100-300 kPa im ersten Schritt, 10 bis 100 MPa im zweiten Schritt gesintert. An keiner Stelle der Schrift werden Elastizitätsmodul, Gehalt oder Größe von Kehlenstoffpartikeln offenbart.

US4205033 offenbart ein Verfahren wobei Tantalpentoxid als Sinterhilfsmittel eingesetzt wird, welches eine Valenzänderung unter Sauerstofffreisetzung bewirkt, wodurch es zu einem Abbrand der Kohlenstoffpartikel kommt.

US5902761 offenbart ein Verfahren wobei zunächst ein Gemisch aus Silizium und Siliziumnitrid eingesetzt wird, dem Wolfram, Mn, Eisen, Kupfer etc. in Oxidform als Nitridierhilfe zugegen wird. Es werden Maßnahmen beschrieben, die ein Zurückbleiben von Kohlenstoffpartikeln verhindern und kein zweistufiges Sinterverfahren angewandt.

US 5508241 beschreibt ein Verfahren zur Herstellung von Siliziumnitridkeramiken, wobei an der Luft bei 600°C ausgeheizt und ein einstufiges Sinterverfahren bei hohen Drücken eingesetzt wird und der ausgeheizte Grünling mit Glas ummantelt ist.

Die Ursache für derartige Schädigungen sind im Bereich der Kontaktmechanik angesiedelt, indem steife Körper, d.h. Materialien im Bereich ihres linearelastischen Verhaltens, aufeinander einen so hohen Druck ausüben, dass es zur Ausbildung dieser oberflächlichen C-Risse und im folgenden zur Ausbildung konusförmiger Defekte kommt, die sich tiefer in das Material hinein ausbreiten.

Die Grundgleichungen der Kontaktmechanik wurden von Hertz eingeführt und sind in vielen Lehrbüchern dokumentiert.

Im Kontaktbereich zweier sphärischer Körper gilt unter der Voraussetzung des linearelastischen Verhaltens beider Körper für die größte Flächenpressung $q_0$:

$$q_0 = 3/2 \ P/(2 \ \pi \ a)$$

mit der Druckkraft P und dem Radius a der Berührfläche. Der Radius a der Berührfläche ist von den Radien $R_1$ und $R_2$ beider Körper sowie den elastischen Eigenschaften Elastizitäts-Modul E und der aus der Festigkeitslehre bekannten Poissonzahl $\mu$ des Werkstoffs beider Körper abhängig.

Während die maximale Flächenpressung bzw. Druckspannung $q_0$ in der Mitte der Berührfläche auftritt, so entsteht die maximale Zugspannung $\sigma_r$, die für das Versagen spröder Werkstoffe maßgeblich ist, am Rand der Kontaktfläche und beträgt

$$\sigma_r = (1-2\,\mu)\,q_0 / 3$$

Eine Schädigung der Körper im Kontakt tritt dann auf, wenn die Zugspannungen die Zugfestigkeit des Materials überschreiten.

Die Höhe der ertragbaren Flächenpressung wird dabei von einer Vielzahl von Werkstoff- und Gefügekennwerten bestimmt, wie Zug- und Scher-Festigkeit, Zähigkeit, Elastizitäts- und Scher-Modul, Defektanzahl und -größe, wobei diese z.T. voneinander abhängigen Werkstoff- und auch Technologie-spezifischen Kennwerte keinen direkten Schluss auf die bevorzugte Beschaffenheit eines stoßfesten Werkstoffes erlauben.

Die Aufgabe der Erfindung bestand darin, keramische Werkstoffe mit möglichst hoher Stoßfestigkeit zur Verfügung zu stellen.

Zur Ermittlung der Stoßfestigkeit wird dabei ein einfaches, aber industriell etabliertes Prüfverfahren zur Ermittlung der Kerbschlagfestigkeit in leicht modifizierter Form angewandt:

Eingesetzt wird dabei ein Pendelschlagwerk von z. B. Fa. Zwick mit einer effektiven Pendellänge von 1 = 156 mm und einer Masse des Schlaghammers von m = 360 g.

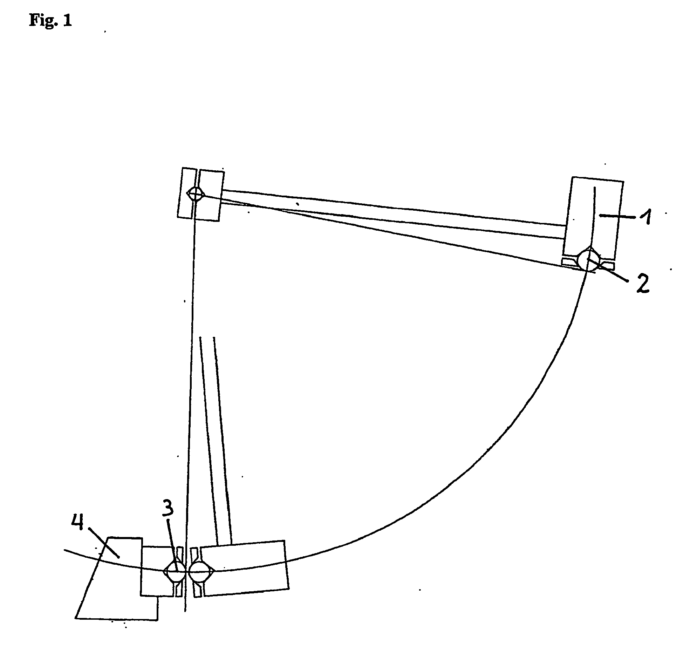

Das Pendelschlagwerk ist schematisch in Figur 1 wiedergegeben. In einer Senkung im Hammer, der sogenannten Kugelaufnahme (1) wird mit einem Gegenstück eine Kugel (2) mit z.B. einem Durchmesser D von 12,7 mm in Lagerqualität nach DIN 5401 von mindestens G25 oder besser fixiert. Eine gleich große, identische Kugel (3) bezüglich Werkstoff und Bearbeitungsqualität ist ebenfalls auf die gleiche Art im Widerlager (4) des Pendelschlagwerkes positioniert. Die zu prüfenden Kugeln werden vor dem Einbau durch eine Farbeindringprüfung bezüglich bereits vorhandener Defekte untersucht. Nur nach diesem Verfahren als defektfrei bewertete Kugeln werden für die Untersuchung herangezogen. Durch Veränderung des Auslenkwinkels $\alpha$ kann die Schlaggeschwindigkeit und damit die Stoßenergie variiert werden. An den beiden Kugeln wird nach jedem Schlagversuch die Position der möglichen Schadensstelle markiert, die Kugeln anschließend um 90 Grad gedreht und ein neuer Versuch bei gleichem Auslenkwinkel $\alpha$ durchgeführt. Auf diese Weise werden pro Kugel 6, d.h. insgesamt 12 mögliche Fehlstellen erzeugt. Nach dem Versuch wird die Anzahl der Fehlstellen auf den Kugeln durch eine Farbeindringprüfung ermittelt. In gleicher Weise können hochpräzise Wälzlager-Rollen oder -Nadeln geprüft werden.

Bei dem von Cundill verwendeten Verfahren zur Bestimmung der Stoßfestigkeit mittels des freien Falls einer Kugel und Aufpralls der Kugel auf eine zweite Kugel berechnet sich die kritische Stoßenergie $W_c$, die zur ersten Bildung von C-Rissen führt, aus der Fallhöhe $h_c$, der Masse der Kugel $m_k$ und der Erdbeschleunigung g nach

$$W_c = m_k\, g\, h_c = 32\, E\, a_c^5 / 15\, R^2$$

Hierbei ist $a_c$ der kritische Radius der Berührfläche, R der Kugelradius in mm und E der Elastizitätsmodul in GPa.

Bei dem oben beschriebenen Pendelschlagwerk ist die Stoßenergie W vom Auslenkwinkel $\alpha$ sowie der Masse $m_a$ des Schlagarms und der Pendellänge 1 abhängig:

$$W = g\,(1\text{-}\cos\alpha)\,m_a\,l.$$

Masse $m_a$ und Pendellänge 1 können zusammengefasst werden zu einer Gerätekonstante K. Diese beträgt für die verwendete Schlagapparatur (Masse = 360g, Pendellänge = 156 mm) bei dem beschriebenen Aufbau (unter Vernachlässigung der relativ geringen Kugelmasse):

$$K = 0{,}0562\ \text{kg m.}$$

Damit gilt für den kritischen Auslenkungswinkel $\alpha_c$, bei dem die Stoßenergie den kritischen Wert $W_c$ erreicht:

$$\cos\alpha_c = 1 - (32\,E\,a_c^{5} / 15\,R^2\,g\,K).$$

Damit kann dieser Versuch dahingehend ausgewertet werden, den kritischen Auslenkungswinkel $\alpha_c$ und daraus die kritische Stoßenergie $W_c$ zu bestimmen, die die Stoßfestigkeit des Kugelmaterials charakterisiert.

Es ist ratsam, für Vergleichstests nur eine konstante Kugelgröße einzusetzen, wobei der Durchmesser $\geq 6$ mm sein sollte. Als Obergrenze für den sinnvollen Einsatz dieser Prüfung wird ein Kugeldurchmesser von 15 mm festgelegt.

In Vorversuchen zeigte sich, dass ein Auslenkwinkel $\alpha = 40°$ einer Stoßenergie entspricht, die eine Differenzierung der Stoßfestigkeit verschiedener Kugelmaterialien ermöglicht. Die Tests wurden jeweils mit 6 Stößen ausgeführt und die Kugeln bezüglich der Anzahl von Schädigungen untersucht. Es handelt sich also um einen reinen Vergleichstest, wobei 12 Schädigungen (6 pro Kugel) einer 100 %-Schädigung entsprechen.

Auf diese Art und Weise wurden verschiedenste Kugelmaterialien getestet, deren Zusammensetzung und technologischen Kennwerte stark variierten. Die Werkstoffcharakteristika und Testergebnisse der Materialien der Beispiele sind in Tabelle 1 zusammengestellt

Die in Tabelle 1 aufgeführten Werkstoffcharakteristika und -eigenschaften werden, sofern nicht anders angegeben, wie folgt ermittelt:

- Sinterdichte:

     Sie wird bestimmt durch Auftriebsmessung in $H_2O$ nach dem Prinzip von Archimedes.

- Relative theoretische Dichte:

     Dies ist ein Rechenwert, basierend auf den Dichten der Einzelkomponenten unter Berücksichtigung des Sauerstoffgehalts von $Si_3N_4$- oder SiC-Pulvern, der als sich auf den $Si_3N_4$- (oder SiC-)Teilchen befindliches $SiO_2$ angenommen wird mit einer Dichte von 2,33 g/cm$^3$.

Die Berechnung erfolgt nach:

- $SiO_2$-Konzentration im Ausgangsansatz (c-SiO$_2$):

$$\text{c-SiO}_2 = \left[\frac{100 - (\text{c-Shm} + \text{c-Zus})}{100}\right] \bullet (\text{c-O/SN}) \bullet 1{,}88 \quad [\text{Gew.-\%}]$$

mit:

| | |
|---|---|
| c-Shm = | Sinterhilfsmittel-Konzentration, Gew.-% |
| c-Zus = | Konzentration an Zusätzen, Gew.-% |
| c-O/SN = | Sauerstoffgehalt des $Si_3N_4$-Pulvers, Gew.-% |
| 1,88 = | Umrechnungsfaktor Sauerstoff / $SiO_2$ |

- $Si_3N_4$-Konzentration im Ausgangsansatz (c-SN):

     c-SN = 100 - (c-Shm + c-Zus + c-SiO$_2$) [Gew.-%]

- Theoretische Dichte des z.B. SN-Werkstoffes (p-th):

$$\text{p-th} = \frac{100}{\dfrac{\text{c-SN}}{\rho\text{-SN}} + \dfrac{\text{c-SiO}_2}{\rho\text{-SiO}_2} + \Sigma\left[\dfrac{\text{c-Shm (i)}}{\rho\text{-Shm (i)}}\right] + \Sigma\left[\dfrac{\text{c-Zus (i)}}{\rho\text{-Zus (i)}}\right]} \quad , [\text{Gew.-\%}]$$

ρ-SN, -SiO$_2$, -Shm, -Zus: Reindichte der jeweiligen Substanz in g/cm$^3$

- Werkstoffdichte in Prozent der theoretischen Dichte:

Hierzu wird an den durch Sintern oder heißisostatisches Pressen (HIPen) verdichteten Teilen die tatsächliche Dichte ρ-w nach dem bekannten Wasserauftriebsverfahren (Archimedes) ermittelt (in g/cm$^3$) und dieser Wert in Bezug gesetzt zur theoretischen Dichte ρ-th:

$$\rho\text{-w/th} = \frac{\rho\text{-w}}{\rho\text{-th}} \bullet 100 \qquad [\%]$$

- C-Gehalt:

Dieser wird bestimmt mit einem Analysenautomaten, z. B. CSA 2003, Fa. Leybold-Heraeus nach dem Oxidationsverfahren. Hierbei wird der Kohlenstoff bei 1800°C zu $CO_2$ oxidiert, dessen Konzentration über Infrarot-Absorption ermittelt wird und eine Berechnung des C-Gehaltes der Probe ermöglicht. Das Verfahren gestattet auch eine Unterscheidung nach freiem und gebundenem Kohlenstoff.

- Raumtemperatur-Biegefestigkeit (RT-BF):

Die Ausführung erfolgt nach DIN EN 843-1 in 4-Punkt-Biegung mit Stützabstand 40/20 mm an entsprechenden normgemäßen Prüfkörpern, die separat aus dem identischen Ausgangsmaterial wie die Prüfkugeln hergestellt werden und die gleichen thermischen Verdichtungszyklen durchlaufen haben. Die Mindestanzahl zu prüfender Biegefestigkeitsproben wird mit 8 festgelegt. Bei den in Tabelle 1 angegebenen Werten für Vergleichskugeln handelt es sich um Prospektwerte.

- Härte:

Diese wird an polierten Anschliffen nach DIN EN 843-4 unter Verwendung eines Kleinlast-Härteprüfers und einer Last von 10 kp (HV10) vermittelt.

- Bruchzähigkeit $K_{iC}$:

Generell wird diese nach dem in einem weltweiten Vergleichsversuch als am zuverlässigsten eingestuften SEVNB-Verfahren bestimmt, beschrieben in "J. Kübler: Fracture Toughness of Ceramics using SEVNB Method: Round Robin"; VAMAS Report Nr. 37 (ISSN 1016-2186). Da jedoch aus den zu bewertenden Wälzlagerkomponenten im Allgemeinen keine entsprechenden Prüfkörper präpariert werden können, erfolgt hier die Ermittlung eines Vergleichs-$K_{Ic}$-Wertes über die Bestimmung der Risslänge der Vickers-Härteeindrücke. Die Auswertung erfolgt nach dem Verfahren von Nijhara, beschrieben in Munz, D., "Mechanisches Verhalten keramischer Werkstoffe", Springer Verlag, Berlin 1989. Voraussetzung ist allerdings, dass E-Modul und Härte bekannt sind.

- Elastische Konstanten: E-Modul, G-Modul, Poisson-Zahl μ:

Die elastischen Konstanten werden nach der RUS-Methode (Resonant Ultrasound Spectroscopy) direkt an Kugeln bestimmt. Bei dem verwendeten Verfahren wird die zu untersuchende Kugel durch einen Schwingungsgeber in Schwingung versetzt Die Schwingungsamplitude wird gleichzeitig gemessen. Durch Variation der Anregungsfrequenz des Schwingungsgebers, typischerweise im Frequenzbereich 100 kHz bis 2 GHz können die Resonanzfrequenzen der Kugel bestimmt werden. Die Auswertung erfolgt nach dem in "Resonant Ultrasound Spectroscopic Techniques for Measurement of the Elastic Moduli of Solids", A. Migliori, J. L. Sarrao, William M. Visscher, T. M. Bell, Ming Lei, Z. Fisk, and R. G. Leisure, Physica B 1, 183 (1993), beschriebenen Verfahren.

- Defekte:

Diese werden bevorzugt an den Prüfobjekten, d.h. den endbearbeiteten hochpräzisen Kugeln ermittelt.

Zu Defekten zählen offene Risse, geschlossene C-Risse, desweiteren Poren und Lunker, metallische oder sonstige Einschlüsse und Heterogenitäten sowie diffuse optische Heterogenitäten, die sich bei exakten Analysen als Ansammlung von Mikroporosität erweisen und bei $Si_3N_4$-Werkstoffen häufig als "Wolken" oder "Spots" bezeichnet werden. Als Grenzgröße, die der Defekt in seiner größten Abmessung nicht überschreiten darf, werden 50 μm festgelegt. Die Prüfung erfolgt visuell auf der gesamten Kugeloberfläche mit Hilfe einer Lupe mit 50-facher Vergrößerung und geeigneter Beleuchtung, gegebenenfalls nach Tränkung mit einer fluoreszierenden Flüssigkeit und UV-Beleuchtung.

Verschiedenste Werkstoffvarianten wurden bezüglich der genannten Kriterien nach den beschriebenen Verfahren charakterisiert und anhand von hochpräzisen Kugeln der Durchmesser ≥ 6 bis ≤ 15 mm mit einer Genauigkeitsklasse G5 bis G25 bezüglich der Stoßfestigkeit mittels des oben beschriebenen Schlagtestes bewertet. Als Bewertungskriterium wird eine Schädigung der Prüfobjekte von weniger als 50 %, d. h. maximal 5 von 12 möglichen Schädigungen beim beschriebenen Schlagtest mit der Pendelschlagapparatur und einem Auslenkwinkel $\alpha$ = 40° gewählt. Wie Tests zur Festlegung der Prüfbedingungen zeigten, führen diese Bedingungen (Pendellänge l = 156 mm, Masse des Schlaghammers m = 360 g, Auslenkwinkel $\alpha$ = 40°) zu einer deutlichen Differenzierung bezüglich der Stossfestigkeit verschiedener Werkstoff- und Wälzkörperqualitäten von 0 - 100 % Schädigung. Eine Forderung bzw, ein Beurteilungskriterium von 0% Schädigung ist zwar praxisrelevant, würde jedoch bei der Prüfung zu Unsicherheiten dahingehend führen, ob die Prüfung im Bereich der maximalen Stoßfestigkeit der Prüfobjekte erfolgt.

Es wurde nun gefunden, dass keramische Werkstoffe, die fein verteilte Kohlenstoffpartikel und spezifische mechanische und elastische Eigenschaften aufweisen, eine besonders hohe Stoßfestigkeit aufweisen.

Gegenstand der Erfindung ist daher ein keramischer Werkstoff auf Basis von Siliciumnitrid oder Zirkondioxid, **dadurch gekennzeichnet, dass** er eine Härte HV10 von maximal 15,5 GPa, einen E-Modul bei Raumtemperatur von kleiner 330 GPa, eine RT-Biegcfestigkeit von mindestens 750 MPa, eine Bruchzähigkeit von mindestens 5,5 MPa m$^{1/2}$ und bei 25°C eine Poisson-Zahl bzw. Querkontraktionszahl von ≤ 0,3 aufweist und der Werkstoff keine makroskopischen Defekte größer als 20 μm und/oder optischen Heterogenitäten größer als 50 μm aufweist und 0,2 bis 5 Gew.-% Kohlenstoffpartikel enthält, wobei die Kahlenstoffpartikcl eine maximale Partikelgröße von 5 μm aufweisen.

Gegenstand der Erfindung ist weiter ein Verfahren zur Herstellung eines keramischen Werkstoffs gemäss der vorliegenden Erfindung, **dadurch gekennzeichnet, dass** als Rohstoffe $Si_3N_4$-Pulver und Sinterhilfsmittel, gegebenenfalls unter Zusatz eines Dispergierhilfsmittels zu einem Schlicker verarbeitet werden, der Schlicker nassvermahlen wird, zur Vermeidung der Bildung makroskopischer Defekte größer als 20 μm und/oder optischer Heterogenitäten größer als 50 μm die beim Nassmahlen entstehende Suspension über einen Magnetabscheider und ein Feinsieb/Fein.filter mit maximaler Sieböffnung/Filterporengröße von 50 μm abgesiebt wird, dem Schlicker als organische Zusätze Polyacrylate, Polyvinylalkohole, Polyglycole und/oder Polyvinylpyrrolidon zugesetzt werden, die entstehende Mischung anschließend einer Trocknung und Granulierung und einer Formgebung unterzogen wird, wobei die Trocknung bei Temperaturen kleiner 200°C erfolgt, anschließend die organischen Zusätze bei Temperaturen zwischen 100 und 400°C für eine Dauer von 0,5 bis 4 h an Luft oder zwischen 100 und 800°C für eine Dauer von 0,5 bis 4h in inerter Atmosphäre oder im Vakuum ausgeheizt und schließlich der entstehende ausgeheizte Formkörper in einem zweistufigen Prozess gesintert wird, wobei der Formkörper in der ersten Stufe für 0,5 bis 5 h bei einer Temperatur von bis 2000°C und einem $N_2$- oder Inertgas-Druck von 1 bis 50 bar und in der zweiten Stufe für 0,5 bis 2,5 h bei einer Temperatur von bis 2000°C und einem $N_2$- oder Inertgas-Druck von 50 bis 2500 bar behandelt wird, wobei es zur Ausscheidung von Kohlenstoffpartikeln kommt und keine makroskopischen Defekte größer als 20 μm und/oder optischen Heterogenitäten größer als 50 μm gebildet werden.

Gegenstand der Erfindung ist weiter ein Verfahren zur Herstellung eines keramischen Werkstoffs gemäß der Erfindung, **dadurch gekennzeichnet, dass** als Rohstoffe $ZrO_2$-Pulver und Sinterhilfsmittel, gegebenenfalls unter Zusatz eines Dispergierhilfsmittels zu einem Schlicker verarbeitet werden, der Schlicker nassvermahlen wird und dem Schlicker als organische Zusätze Polyacrylate, Polyvinylalkohole, Polyglycole und/oder Polyvinylpyrrolidon zugesetzt werden, die entstehende Mischung anschließend einer Trocknung und Granulierung und einer Formgebung unterzogen wird, wobei die Trocknung bei Temperaturen kleiner 250°C erfolgt, anschließend die organischen Zusätze bei Temperaturen zwischen 100 und 400°C für eine Dauer von 0,5 bis 4 h an Luft oder zwischen 100 und 800°C für eine Dauer von 0,5 bis 4h in inerter Atmosphäre oder im Vakuum ausgeheizt und schließlich der entstehende ausgeheizte Formkörper in einem zweistufigen Prozess gesintert wird, wobei der Formkörper in der ersten Stufe für 0,5 bis 5 h bei einer Temperatur von bis 1700°C und einem $N_2$- oder Inertgas- Druck von 1 bis 50 bar und in der zweiten Stufe für 0,5 bis 2,5 h bei einer Temperatur von bis 1700°C und einem $N_2$- oder Inerigas-Druck von 50 bis 2500 bar behandelt wird.

Gegenstand der Erfindung ist weiter die Verwendung eines keramischen Werkstoffs gemäß der Erfindung als Wälzkörper in Lagern sowie sonstigen stoßbeanspruchten Bauteilen sowie geformten Gegenständen.

Die Größe der eingelagerten Kohlenstoff-Partikel wird an einem polierten Anschliff mittels Lichtmikroskop bei 500-facher Vergrößerung direkt oder anhand von Aufnahmen durch Vermessen bestimmt. Bevorzugt wird ein geeignetes elektronisches Bildverarbeitungssystem eingesetzt. Nach einer Kontrastmodifikation eines abgespeicherten digitalisier-

EP 1 529 021 B1

ten Bildes erfolgt eine Auswertung der mittleren und maximalen C-Partikelgröße z.B. mit der Software "Image C Micro" der Firma Imtronic GmbH, Berlin. Um einen statisch abgesicherten Meßwert zu erhalten wird als Kriterium nur die maximale C-Partikelgröße herangezogen, wobei mindestens 1000 C-Partikel vermessen werden müssen.

Die erfindungsgemäßen Werkstoffe weisen eine verbesserte Stoßfestigkeit auf. Beispielsweise werden Kugeln aus einem erfindungsgemäßen Werkstoff auf Basis von $Si_3N_4$ im oben beschriebenen Schlagtest unter Einsatz einer Pendelschlagapparatur und einem Auslenkwinkel $\alpha = 40°$ zu weniger als 50 % geschädigt, d.h. es treten maximal 5 von 12 möglichen Schädigungen auf, sofern die Kugeln vor dem Schlagtest so endbearbeitet werden, dass ihr Bearbeitungs- zustand mindestens den Kriterien der Genauigkeitsklasse G25 entspricht. Dass sich die Stoßfestigkeit durch Gegenwart von Kohleastoffpartikeln im keramischen Werkstoff verbessern lässt, war nicht vorauszusehen. Vielmehr hätte erwartet werden müssen, dass sich die mechanischen Eigenschaften eines keramischen Werkstoffs verschlechtern, wenn dieser mit freiem Kohlenstoff verunreinigt ist. Auch die Tatsache, dass Werkstoffe mit geringer Härte eine besonders hohe Stoßfestigkeit aufweisen überrascht.

Der Gehalt an Kohlentoffpartikeln beträgt vorzugsweise 0,2 bis 3 Gew.-%.

Es ist vorteilhaft, dass die Dichte des keramischen Werkstoffs mindestens 98,5 % der theoretischen Dichte entspricht.

Die Biegefestigkeit wird an werkstoffseitig identischen Prüfkörpern und nicht an Wälzkörpern aus dem erfindungsgemäßen Werkstoff direkt bestimmt.

Makroskopische Defekte wie offene Risse, geschlossene. C-Risse, Poren und Lunker, metallische oder sonstige Einschlüsse oder diffuse optische Heterogenitäten, die sich bei exakten Analysen als Ansammlung von Mikropo- rosität erweisen und bei $Si_3N_4$-Werkstoffen häufig als "Wolken" oder "Spots" bezeichnet werden, wirken sich negativ auf die mechanischen Eigenschaften eines Werkstoffs aus. An derartigen Defekten setzt im Schlagtest gemäß den spezifizierten Kriterien sofort eine Schädigung in Form der Ausbildung der kritischen C-Risse ein. Daher weisen die erfindungsgemäßen keramischen Werkstoffe keine auf einer polierten Kugeloberfläche visuell, unter Zuhilfenahme geeigneter fluoreszierender Eindringtinten und entsprechender Beleuchtungen detektierbare makroskopische Defekte, wie beispielsweise offene Risse, C-Risse, Poren, Lunker und Einschlüsse jedweder Art, einer maximalen Ausdehnung > 20 $\mu$m und keine diffusen optischen Heterogenitäten von $\geq$ 50 $\mu$m maximaler Ausdehnung auf. Das Auftreten unerwümschter makroskopische Defekte und/oder optischer Heterogenitäten hängt im Wesentlichen von den Prozessbedingungen bei der Herstellung der erfindungsgemäßen Werkstoffe ab. Das weiter unten beschriebene Verfahren zur Herstellung dieser Werkstoffe gewährleistet, dass keine makroskopischen Defekte einer Ausdehnung > 20 $\mu$m und keine diffusen optischen Heterogenitäten von $\geq$ 50 $\mu$m maximaler Ausdehnung auftreten.

Bei den erfindungsgemäßen keramischen Werkstoffen handelt es sich vorzugsweise um einen Werkstoff auf Basis von Siliciumnitrid, insbesondere bevorzugt auf Basis von $\beta$-Siliciumnitrid. $\alpha$-SiAlON- und/oder SiC-Phasen erhöhen die Härte und/oder den E-Modul keramischer Werkstoffe. Die erfindungsgetnäßen Werkstoffe enthalten diese Phasen daher vorzugsweise nicht in einer Menge von größer 35 Vol.-%.

Ein erfindungsgemäßer Werkstoff auf Basis von Siliciumnitrid kann zusätzlich Carbid-, Nitrid-, Carbonitrid-, Borid- und/oder Silicid-Verbindungen der Elemente der Gruppen IVB (Ti, Zr, Hf), VB (V, Nb, Ta) und VIB (Cr, Mo, W) des Periodensystems und des Siliciums und/oder des Eisens aufweisen, wobei deren maximale Größe 10 $\mu$m nicht übersteigen darf und deren maximale Konzentration < 50 Vol.-% beträgt. Größere Partikel und/oder deren Anwesenheit in höheren Konzentrationen würden sich negativ auf die mechanischen Eigenschaften auswirken. Diese Werkstoffkenawerte werden an keramografischen Anschliffen nach dem Fachmann bekannten Verfahren ermittelt, indem mittels Raster-Elektronenmikroskop an einem polierten Anschliff bei 3000-facher Vergrößerung direkt oder anhand von Aufnahmen die Größe und der Anteil derartiger Partikel durch Vermessen bestimmt wird. Ein geeignetes manuelles Verfahren hierfür ist das dem Fachmann bekannte Schnittlängen-Verfahren (Lineal Intercept Method). Alternativ kann auch ein geeignetes elektronisches Bildverarbeitungssystem eingesetzt werden. Durch den Zusatz der genannten feindispersen Carbid-, Nitrid-, Carbonitrid-, Borid- und/oder Silicidverbindungen lässt sich eine besonders günstige Gefügebeschaffenheit realisieren. Diese Verbindungen bleiben während der Herstellung des Werkstoffes weitestgehend als diskrete Partikel erhalten, wodurch beispielsweise das Kornwachstum einer $Si_3N_4$-Hauptphase gezielt beeinflusst werden kann. Damit diese Partikel nicht als Versagensausgänge bei der Festigkeitsprüfung oder im Einsatz entsprechender Wälzkörper wirken, darf ihre maximale Größe 10 $\mu$m nicht überschreiten. Da diese Phasen gegenüber $Si_3N_4$ jedoch überwiegend einen höheren E-Modul aufweisen, muss ihre Konzentration mit diesem Werkstoffcharakteristikum abgestimmt werden. In speziellen Fällen kann die Konzentration bis 50 Vol.-% betragen und trotzdem der erfindungsgemäße niedrige E-Modul des Werkstoffes erreicht werden.

Zusätzlich müssen Sinterhilfsmittel vorhanden sein. Als Sinterhilfsmittel sind prinzipiell all jene Verbindungen und Verbindungskombinationen möglich, die die spezifizierten Gefügemerkmale und Werkstoffeigenschaften zu erzielen gestatten. Diese umfassen Oxide der Gruppen IIA (Be, Mg, Ca, Sr, Ba), IIIB (Sc, Y, La,) inklusive der Seltenen Erden und IVB (Ti, Zr, Hf) des Periodensystems der Elemente, sowie $B_2O_3$, $Al_2O_3$ und/oder AIN und $SiO_2$, wobei letzteres simultan über ein $Si_3N_4$-Rohstoffpulver eingebracht aber auch gezielt zugesetzt werden kann.

Bevorzugt weisen die erfindungsgemäßen Werkstoffe eine Kombination der als bevorzugt beschriebenen Gefügemerkmale und Werkstoffeigenschaften auf.

Auf eine generelle Spezifizierung der Gefügebeschaffenheit bezüglich Korngröße, Kornform, mineralogischer Phasenbestand etc. kann verzichtet werden, da sich diese

Parameter in den spezifizierten, erfindungsgemäßen Werkstoffeigenschaften widerspiegeln. Als diesbezüglich wichtig sind einerseits das Volumenverhältnis der diskreten, kristallinen Hauptphasen zu der sich aus den Sinteradditiven bildenden kontinuierlichen amorphen oder teilkristallinen Korngrenzphase, andererseits die mittlere Korngröße, die maximale Korngröße und die Kornform der kristallinen Hauptphasen zu bewerten. Bezüglich letzterem sind für Siliciumnitrid-basierende Werkstoffe stäbchenförmige Körner mit maximalen Dicken <2 $\mu$m und maximalen Längen <10 $\mu$m als günstig bekannt und nach dem Fachmann bekannten Maßnahmen einzustellen.

Aus den Ergebnissen der durchgeführten Versuche ergibt sich die folgende Werkstoff-bezogene Interpretation für die Forderungen an einen bezüglich der Stoßfestigkeit verbesserten keramischen Werkstoff, wobei es sich hierbei um den Versuch einer Erläuterung handelt durch den der erfindungsgemäße Gedanke nicht eingeschränkt wird:

Von bestimmender Bedeutung ist der Wert des Elastizitäts-Moduls (E-Modul) und der Härte des Werkstoffs. Auch der Größe der Poisson-Zahl, zusammen mit der Dichte des Werkstoffes kommt Bedeutung zu. Den Ergebnissen zufolge sollte der E-Modul möglichst gering sein, was bei einem vorgegebenen Werkstoff nur in Grenzen beeinflussbar ist, ohne dass sich weitere Werkstoffkennwerte in unerwünscht hohem Maße verändern. So kann diese Beeinflussung nur in sehr begrenztem Umfang über die Dichte bzw. Restporosität erfolgen, da sich dadurch die Festigkeit, Zähigkeit und Härte stark vermindern. Eine theoretische Dichte von $\geq$ 98 % ist zum Erreichen der Werkstoffkennwerte vorteilhaft. Als eine Möglichkeit der E-Modul-Reduktion erweist sich jedoch das Composite-Prinzip mehrphasiger Werkstoffe in der Kombination von Phasen mit höheren und geringeren E-Moduli. Dies ist beispielsweise bei Werkstoffen auf Basis von $Si_3N_4$ über die Art und Menge der für das Sintern notwendigen Sekundärphase möglich, die sich aus der Reaktion der gezielt zugesetzten Sinterhilfsmittel und dem $SiO_2$-Gehalt des $Si_3N_4$-Rohstoffpulvers ausbildet und im verdichteten Material als amorphe oder teilkristalline Korngrenzphase verbleibt. Die Versuche zeigen, dass diese Phasen vorzugsweise in einer Konzentration von > 10 Vol.-% vorliegen sollten, um einen signifikanten Effekt auf den E-Modul eines Werkstoffes mit einer theoretischen Dichte von 98 % auszuüben.

In gleicher Weise wirken feine Kohlenstoffparbkel (C-Partikel) im Gefüge des Werkstoffs, die, wie beschrieben wird, über eine gezielte erfindungsgemäße Führung des Herstellungsprozesses erzeugt werden können. Diese C-Partikel dürfen jedoch keine Größe über 5 $\mu$m erreichen und nur in einer Konzentration von maximal 5 Gew.-% vorliegen, um die mechanischen Werkstoffeigenschaften nicht in unerwünscht hohem Maße negativ zu beeinflussen. Aufgrund des hohen E-Modul-Unterschieds zum Matrixmaterial scheinen diese C-Partikel einen starken Stoßimpuls-dämpfenden Effekt auszuüben.

Die Rohstoffe zur Herstellung der erfindungsgemäßen Werkstoffe, beispielsweise $Si_3N_4$ oder $ZrO_2$, werden bevorzugt als Schlicker auf Basis organischer Lösungsmittel wie Alkohole, Aceton etc. kontaminationsarm gemahlen, deagglomeriert und homogenisiert. Auch eine wässrige Aufbereitung, gegebenenfalls unter Einsatz geeigneter Dispergierhilfsmittel zur Erhöhung des Feststoffgehalts des Schlickers, ist möglich. Voraussetzung hierfür ist, dass keine hydrolysegefährdeten Rohstoffe eingesetzt werden und stoffliche als auch verfahrenstechnische Vorkehrungen getroffen werden, dass bei der Granulation zur Überführung der aufbereiteten Schlicker in ein freifließendes, pressfähiges Granulat keine zu harten Bestandteile gebildet werden, die bei der Formgebung erhalten bleiben und im gesinterten bzw. durch heißisostatisches Pressen verdichteten Werkstoff zu unerwünschten Defekten führen.

Für die Aufbereitung werden bevorzugt arteigen ausgekleidete und mit arteigenen Mahlkugeln betriebene Rührwerks-Kugelmühlen eingesetzt.

Vorzugsweise wird in den äußeren Kreislauf dieser im Durchlauf betriebenen Mühlen ein Magnetabscheider eingesetzt, um metallische Verunreinigungen zu entfernen.

Die Mahlbedingungen werden vorteilhaft so gewählt, dass die Teilchengrößenanalyse des aufbereiteten Schlickers, bestimmt nach bekannten Verfahren, wie z.B. (Laser-)Licht-Streuung, realisiert in kommerziell erhältlichen Messgeräten, einen d-90-Kennwert von < 1 $\mu$m ergibt, d.h. 90 % der Teilchen sind < 1 $\mu$m. Hochqualitative, feindisperse Rohstoffe weisen solche Werte bereits im Einsatzzustand auf, so dass im wesentlichen nur noch eine Deagglomeration und Homogenisierung ausgeführt werden muss. Hierfür hat sich beim beschriebenen Aufbereitungsverfahren eine Mühlenverweildauer pro Kilogramm Ausgangsmischung von mindestens 30 Minuten bewährt. Beim Einsatz gröberer Ausgangsstoffe muss diese Mühlenverweildauer entsprechend gesteigert werden, um einen d-90 Kennwert < 1 $\mu$m zu erreichen. Um gegebenenfalls trotzdem vorhandene Grobanteile, die zu Defekten im verdichteten Material fuhren können, zuverlässig zu eliminieren, hat sich eine Feinfilterung des Schlickers nach der Mahlung über ein Feinfilter oder Sieb von maximal 50 um Poren- oder Sieböffnungsgröße als vorteilhaft erwiesen und wird daher vorzugsweise durchgeführt.

Vor der Überführung der gemäß obigem aufbereiteten Schlicker in ein freifließendes, pressfähiges Granulat werden dem Schlicker geeignete organische Zusätze als Kohlenstoff-haltige Press- und Plastifizierungs-Hilfsmittel zugesetzt, wie sie in der Keramik üblich sind, z.B. bei wasserbasierten Schlickern lösliche Polyvinylalkohole und -acetate, Polyglycole, höhere Fettsäuren, Acrylate etc., bei lösungsmittelbasierten Schlickern Polyvinylpyrrolidon, Polyglycole, Ölsäure etc. Diese Prozesshilfsmittel werden normalerweise an Luft bei Temperaturen < 700°C rückstandslos verflüchtigt, weshalb ihre Gesamtkonzentration in der Summe vorzugsweise auf < 10 Gew.-% zu begrenzen ist. In der erfindungsgemäßen Verfahrensführung werden sie in einem Ausheizprozess an Luft bei maximal 400°C oder unter Inertgas oder im Vakuum bei maximal 800°C zu nicht mehr flüchtigen, C-reichen Verbindungen abgebaut, die beim späteren Sinterprozess bzw. beim Heiß-Isostatischen Pressen (HIP-Prozess) unter inerten Bedingungen feindisperse C-Partikel ausbilden.

Die Granulation, d.h. die Überführung der Schlicker in ein freifließendes, pressfähiges Granulat erfolgt, je nach Schlickermedium, bevorzugt durch Sprühtrocknung an Luft oder in inertisierten, explosions-geschützten Anlagen. Wichtig ist, dass dieser Prozess so gefahren wird, dass es nicht zur Ausbildung harter Agglomerate und Verkrustungen im Trockner kommt, die im späteren Werkstoff zu Defekten führen. Diesbezüglich haben sich Temperaturen des Trockenmediums Luft oder Inertgas von < 200°C bewährt. Zusätzlich bewährt hat sich ein Absieben des getrockneten Granulats < 150 $\mu$m zur Entfernung gröberer und meist härterer Granulate und Verkrustungen.

Die Formgebung der erwünschten Teile kann nach verschiedenen, in der Keramik üblichen Verfahren erfolgen, bevorzugt wird hierfür das isostatische Pressverfahren eingesetzt bei Drucken von über 1000 bar.

Vor der Verdichtung durch Sintern oder heißisostatisches Pressen müssen die zugesetzten organischen Prozesshilfsmittel ausgeheizt werden, wie oben beschrieben. Wichtig hierbei ist, dass die Bedingungen so gewählt werden, dass bewusst zugesetzte nichtoxidische, anorganische Zusätze und/oder Sinterhilfsmittel nicht oxidiert werden und es gemäss der erfindungsgemäßen Verfahrensführung zur Ausbildung der C-reichen Verbindungen als Vorstufe der feindispersen C-Partikel im verdichteten Werkstoff kommt. Das Ausheizen erfolgt an Luft bei maximal 400°C oder unter Inertgas oder im Vakuum bei maximal 800°C, wobei die zugesetzten Press- und Plastifizierungs-Hilfsmittel zu nicht mehr flüchtigen, C-reichen Verbindungen abgebaut werden.

Nach einer gegebenenfalls auszuführenden Zwischenbearbeitung werden die Formkörper durch thermische Behandlung verdichtet. Vorzugsweise erfolgt die thermische Behandlung in einem zweistufigen Sinter-HIP-Prozess unter inerten Bedingungen, wobei die exakten Prozessbedingungen an die Zusammensetzung und Verdichtungscharakteristik des zu verdichtenden Materials anzupassen sind. So ist die Sinterstufe bezüglich Temperatur und Zeit so zu gestalten, dass das Stadium geschlossener Porosität, das einer Dichte von $\geq$ 93 % der theoretischen Dichte entspricht, bei einem $N_2$-Druck von möglichst < 10 bar erzielt wird. Die Bedingungen der sich anschließenden Hochdruck-Stufe werden vorzugsweise so gewählt, dass mit Unterstützung eines $N_2$-Gasdruckes bis 100 bar beim Gasdrucksintern bzw. von > 1000 bar beim HIPen eine Dichte $\geq$ 98,5 % der theoretischen Dichte und die gewünschte Gefügebeschaffenheit hinsichtlich Korngrößenverteilung und Kornform erzielt wird. Orientierungswerte für diese Bedingungen werden in den Beispielen genannt. Nach dieser Verdichtungsstufe werden die Teile überwiegend einer Endbearbeitung zugeführt, um die Zielbauteile zu realisieren.

Zur Herstellung erfindungsgemäßer Werkstoffe auf Basis von $Si_3N_4$ wird so vorgegangen, dass $Si_3N_4$-Pulver und Sinterhilfsmittel, vorzugsweise $Y_2O_3$ oder $Y_2O_3$ und $Al_2O_3$, gegebenenfalls unter Zusatz eines Dispergierhilfsmittels zu einem Schlicker mit einem Feststoffgehalt von vorzugsweise 30 bis 70 Gew.-% verarbeitet werden. Der Gehalt an Sinterhilfsmittel beträgt dabei vorzugsweise 5 bis 20 Gew.-%, bezogen auf den gesamten Feststoffgehalt des Schlickers. Der Schlicker wird nassvermahlen und dadurch deagglomeriert und homogenisiert. Anschließend werden dem Schlicker geeignete Kohlenstoff-haltige Press- und Plastifizierungs-Hilfsmittel als organische Zusätze zugesetzt. Wasserbasierten Schlickern werden vorzugsweise lösliche Polyacrylate, Polyvinylalkohole und/oder Polyglycole, lösungsmittelbasierten Schlickern vorzugsweise Polyvinylpyrrolidon zugesetzt. Die Press- und Plastifizierungs-Hilfsmittel werden bevorzugt in einer Menge von 1 bis 10 Gew.-%, bezogen auf den gesamten Feststoffgehalt des Schlickers, eingesetzt. Zur Vermeidung unerwünschter makroskopischer Defekte und optischer Inhomogenitäten ist es notwendig bei der Aufbereitung des Schlickers magnetische metallische Verunreinigungen mittels eines Magnetabscheiders zu entfernen und vorhandene Grobanteile durch eine Feinfilterung des Schlickers nach der Mahlung über ein Feinfilter oder Sieb von maximal 50 $\mu$m Poren- oder Sieböfnungsgröße durchzuführen. Die Mischung wird dann einer Trocknung und Granulierung und einer Formgebung unterzogen, wobei die Trocknung vorzugsweise in einem Sprühtrockner bei Temperaturen kleiner 200°C erfolgt. Es schließt sich das erfindungsgemäße Ausheizen der organischen Zusätze an. Der Ausheizprozess erfolgt an Luft bei Temperaturen zwischen 100 und 400°C für eine Dauer von 0,5 bis 4 h, oder unter Inertgas oder im Vakuum bei Temperaturen zwischen 106 und 800°C für eine Dauer von 0,5 bis 4 h. Abschließend wird der ausgeheizte Formkörper gesintert. Das Sintern wird in einem zwei-stufigen Prozess durchgeführt, wobei der Formkörper in der ersten Stufe (Sinterstufe) vorzugsweise für 0,5 bis 5 h bei einer Temperatur bis 2000°C und einem $N_2$- oder Inertgas-Druck von 1 bis 50 bar und in der zweiten Stufe (Gasdruck-Stufe) für 0,5 bis 2,5 h bei einer Temperatur bis 2000°C und einem $N_2$- oder Inertgas-Druck von 50 bis 2500 bar behandelt wird. Insbesondere bevorzugt wird der Formkörper in der ersten Stufe (Sinterstufe) für 0,5 bis 3 h bei einer Temperatur bis 1900°C und einem Druck von 2 bis 20 bar und in der zweiten Stufe (Gasdruck-Stufe) für 0,5 bis 2,0 h bei einer Temperatur bis 1900°C und einem Druck bis 2000 bar behandelt.

Zur Herstellung erfindungsgemäßer Werkstoffe auf Basis von $ZrO_2$ wird so vorgegangen, dass $ZrO_2$-Pulve

und Sinterhilfsmittel, gegebenenfalls unter Zusatz eines Dispergierhilfsmittels zu einem Schlicker verarbeitet werden, der Schlicker nassvermahlen wird und dem Schlicker als organische Zusätze Polyacrylate, Polyvinylalkohole, Polyglycole und/oder Polyvinylpyrrolidon zugesetzt werden, die entstehende Mischung anschließend einer Trocknung und Granulierung und einer Formgebung unterzogen wird, wobei die Trocknung bei Temperaturen kleiner 250°C erfolgt, anschließend die organischen Zusätze bei Temperaturen zwischen 100 und 400°C für eine Dauer von 0,5 bis 4 h an Luft oder zwischen 100 und 800°C für eine Dauer von 0,5 bis 4h in inerter Atmosphäre oder im Vakuum ausgeheizt und schließlich der entstehende ausgeheizte Formkörper in einem zweistufigen Prozess gesintert wird, wobei der Formkörper in der ersten Stufe für 0,5 bis 5 h bei einer Temperatur von bis 1700°C und einem $N_2$- oder Inertgas- Druck von 1 bis 50 bar und in der zweiten Stufe für 0,5 bis 2,5 h bei einer Temperatur von bis 1700°C und einem $N_2$- oder Inertgas-Druck von 50 bis 2500 bar behandelt wird.

Die erfindungsgemäßen keramischen Werkstoffe lassen sich vielseitig anwenden. Bevorzugt sind Anwendungen auf Gebieten, wo es zu einer hohen Stoßbeanspruchung der keramischen Bauteile kommt. Beispielhaft seien der Einsatz als Ventile im Motorenbau, Werkzeugeinsätze in Umformprozessen (Kalt- und Warmumformung) sowie von Schneid- und Zerspanwerkzeugen mit unterbrochenem Schnitt genannt. Vorzugsweise werden die keramischen Werkstoffe als Wälzkörper in Lagern eingesetzt, beispielsweise als Kugeln in Kugellagern, die im Anlagenbau, im Fahrzeugbau sowie der Luft- und Raumfahrt Verwendung finden.

**Beispiele:**

**Beispiel 1a / $Si_3N_4$ - 1a (Vergleichsbeispiel)**

Kommerziell verfügbares $Si_3N_4$ Pulver, hergestellt nach dem Imid-Verfahren, mit einer spezifischen Oberfläche von 14 $m^2$/g, einem O-Gehalt von 1,5 Gew.-%, einem C-Gehalt von 0,1 Gew.-% und einer Summe sonstiger Verunreinigungen von < 200 ppm wurde mit 5 Gew.-% $Y_2O_3$ und 5 Gew.-% $Al_2O_3$ versetzt, wobei das $Y_2O_3$ ein handelsübliches Produkt der Firma H.C. Starck, Goslar (Grade C), das $Al_2O_3$ ein handelsübliches Produkt der Firma Alcoa (Qualität CT3000SG) war. Zusätzlich wurden 2 Gew.-% TiN (H. C. Starck, Grade C) zur Steuerung der Gefügeausbildung zugesetzt. Unter Verwendung des handelsüblichen Dispergierhilfsmittels KV5080 (Firma Zschimmer & Schwarz, Lahnstein) wurde ein wässriger Schlicker mit 60 Gew.-% Feststoffgehalt hergestellt und in einer $Si_3N_4$-ausgekleideten Rührwerks-Kugelmühle mit $Si_3N_4$-Mahlkugeln so deagglomeriert und homogenisiert, dass jeweils 1 kg Feststoff eine Mühlenverweildauer von 1 h erfuhr. Nach dieser Mahlung wurde der Schlicker mit 0,5 Gew.-% Polyvinylalkohol (PVA) (Typ Moviol 4-88) und 2 Gew.-% Polyethylenglykol PEG 2000 als organische Binde- und Plastifizierungshilfsmittel versetzt, über ein Sieb mit Maschenweite 150 μm abgesiebt und mittels eines Sprühtrockners bei Turmtemperaturen von 220°C zu einem freifließenden Granulat getrocknet, das wiederum vor der Formgebung < 150 μm abgesiebt wurde.

Aus diesem Granulat wurden durch ein isostatisches Pressverfahren Kugelrohlinge für einen Enddurchmesser von 12,7 mm, sowie Formkörper zur Herstellung von Biegefestigkeitsproben hergestellt und an Luft bei 350°C ausgeheizt. Die so vorbehandelten Rohlinge wurden in einem 2-stufigen Sinter-HIP-Zyklus verdichtet, wobei die Sinterstufe bei 1850°C, 1,5 h unter 10 bar $N_2$ und die HIP-Stufe bei 1800°C 1 h unter 2000 bar $N_2$ ausgeführt wurde. Die Formkörper erreichten eine Dichte > 98,5 % th. D.. Nach dem Sintern verblieb ein C-Rest von 0,3 Gew.-% im Material, die maximale C-Partikelgröße, bestimmt mittels Bildauswertung wie beschrieben, betrug 3,8 μm. Die weiteren Ergebnisse der Werkstoff- und Kugelcharakterisierung, letzteres nach der Bearbeitung zu Kugeln einer Präzision besser als G25, sind in Tabelle 1 aufgeführt. Wie die aufgeführten Werte zeigen, weisen Werkstoff und Testteile überwiegend die erfindungsgemäßen Kriterien auf, prozessbedingt liegen jedoch eine Reihe von Makrodefekten vor, resultierend unter anderem aus Mahlrückständen und harter, durch die Sprühtrocknung gebildeter Granulate, die zu einem Versagen im spezifizierten Schlagtest führen. Werkstoff und Verfahren sind demzufolge nicht erfindungsgemäß.

**Beispiel 1b / $Si_3N_4$ - 1b**

Unter Beibehaltung der Rohstoffe des Beispiels 1a wurde die Aufbereitung im organischen Medium ausgeführt, d.h. ein Schlicker mit 40 Gew.-% Feststoffgehalt in Isopropanol hergestellt, mittels $Si_3N_4$-ausgekleideter Rührwerks-Kugelmühle mit $Si_3N_4$-Mahlkugeln deagglomeriert und homogenisiert, wobei bei dieser im Durchlauf erfolgenden Aufbereitung im äußeren Kreislauf ein Magnetscheider eingebaut war und der Schlicker nach der Mahlung durch einen Feinfilter der Porengröße 50 μm gepumpt wurde. Diesem Schlicker wurden 3 Gew.-% des organischen Binders Polyvinylpyrrolidon (PVP), gelöst in Isopropanol, zugesetzt bevor dieser mittels eines explosions-geschützten Sprühtrockners bei Turmtemperaturen von 180°C zu einem freifließenden Granulat getrocknet wurde, das wiederum vor der Formgebung < 150 μm abgesiebt wurde.

Aus diesem Granulat wurden wiederum Kugelrohlinge für einen Enddurchmesser von 12,7 mm und Formkörper für Biegefestigkeits-Proben hergestellt, die an Luft bei einer Temperatur von 350°C ausgeheizt wurden. Die erhaltenen Formkörper wurden wie im Beispiel 1a im Sinter- HIP-Verfahren bei identischen Bedingungen verdichtet und anschließend charakterisiert. Es verblieb ein C-Rest von 0,3 Gew.-%, die maximale C-PartikelgröBe, bestimmt mittels Bildauswertung wie beschreiben, betrug 3,6 $\mu$m. Wie die in Tabelle 1 aufgeführten Kennwerte zeigen, werden alle erfindungsgemäßen Kriterien erfüllt. Die modifizierte Aufbereitung unter Einsatz eines Magnetscheiders und Filtrieren des Schlikkers nach der Mahlung durch einen Feinfilter der Porengröße 50 $\mu$m, sowie die reduzierte Sprühturm-Temperatur führen auch zur Abwesenheit der im Beispiel 1a beobachteten Makrodefekte. Im spezifizierten Schlagtest treten C-Risse nur noch in einem Umfang auf, die diesen Werkstoff gemäss den spezifischen Kriterien als stoßfest qualifizieren. Dies bestätigt die Bedeutung der Abwesenheit von Makrodefekten für die Erzielung eines keramischen Werkstoffes mit hoher Stoßfestigkeit. Der Werkstoff und das Verfahren zu seiner Herstellung sind folglich erfindungsgemäß.

### Beispiel 1c / Si$_3$N$_4$ - 1c

Die Ausgangszusammensetzung, Aufbereitung und Formgebung erfolgten hier identisch wie in Beispiel 1b mit der Ausnahme, dass die Kugelrohlinge und Formkörper unter Schutzgas Ar (oder N$_2$) bei bis zu 550°C ausgeheizt wurden. Nach der Verdichtung durch 2-stufiges HIPen, wie in Beispiel 1a beschrieben, verblieben im Material 0,9 Gew.-% feindisperse C-Partikel mit einer maximalen Abmessung laut Bildauswertung von 4,7 $\mu$m, ohne dass sich die Werkstoffeigenschaften signifikant veränderten, wie aus Tabelle 1 ersichtlich ist. Im spezifizierten Schlagtest traten keinerlei C-Risse auf, was den positiven Effekt der C-Partikel auf die Stoßfestigkeit verdeutlicht. Der Werkstoff und das Verfahren zu seiner Herstellung sind folglich erfindungsgemäß.

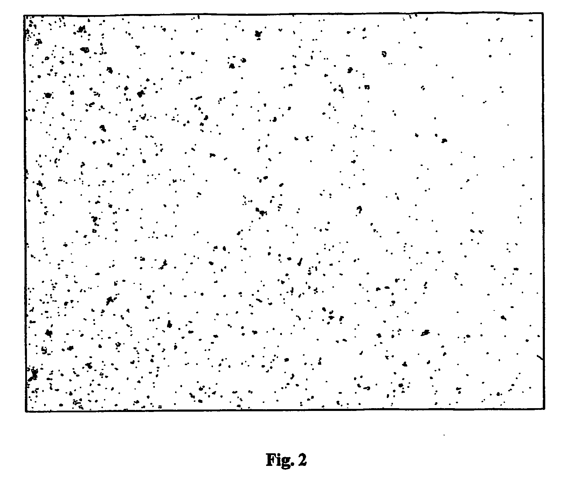

Figur 2 gibt die lichtmikroskopische Aufnahme bei 500-facher Vergrößerung nach Kontrastmodifikation des abgespeicherten digitalisierten Bildes eines gemäß diesem Beispiel erhaltenen Werkstoff wieder. Die Bestimmung der C-Partikelgröße erfolgt an entsprechenden Aufnahmen mit der Software "Image C Micro" der Firma Imtronic GmbH, Berlin. Keines der ausgewerteten 1873 C-Partikel wies eine maximale Abmessung größer als 5 $\mu$m auf. Die Messung ist somit statistisch abgesichert

### Beispiel 2 / SN-2

Das Beispiel 1b wurde reproduziert, im Unterschied dazu jedoch ein direkt nitridiertes Si$_3$N$_4$-Pulver mit einer spezifischen Oberfläche von 5 m$^2$/g, einem O-Gehalt von 0,8 Gew.-% und einem C-Gehalt von 0,3 Gew.-% verwendet. Die Aufbereitung wurde auf eine Mühlenverweildauer von 1,5 h/kg erhöht, wobei bei der im Durchlauf erfolgenden Aufbereitung im äußeren Kreislauf ein Magnetscheider eingebaut war und der Schlicker nach der Mahlung durch einen Feinfilter der Porengröße 50 $\mu$m gepumpt wurde. Formgebung, Ausheizen an Luft und Sinter-HIP-Verdichtung erfolgten identisch den in Beispiel 1b angewandten Verfahren und Bedingungen. Die Eigenschaften des resultierenden Werkstoffes und der daraus hergestellten Produkte sind in Tabelle 1 aufgeführt, sie entsprechen den erfindungsgemäßen Kriterien. Beim spezifizierten Schlagtest traten C-Risse nur in einem Umfang auf, der diesen Werkstoff gemäss den spezifizierten Kriterien als stoßfest qualifiziert. Dies verdeutlicht, dass bei Erreichen der erfindungsgemäßen Werkstoff- und Bauteilkriterien, sowie bei Anwendung des spezifizierten Herstellungsverfahrens die Art des Rohstoffes von nachgeordneter Bedeutung ist. Der Werkstoff und das Verfahren zu seiner Herstellung sind erfindungsgemäß.

### Beispiel 3 / Si$_3$N$_4$ - 3

Kommerziell verfügbare Si$_3$N$_4$-Pulver M11 (H.C. Starck) hergestellt durch Direktnitridierung, mit einer spezifischen Oberfläche von 12 m$^2$/g, einem O-Gehalt von 1,6 Gew.-%, einem C-Gehalt von 0,1 Gew.-% und einer Summe sonstiger Verunreinigungen von < 200 ppm wurde mit 1,4 Gew.-% MgO und 3,6 Gew.-% Al$_2$O$_3$ in Form eines gefällten Spinell-Pulvers MgAl$_2$O$_4$ mit einer spezifischen Oberfläche von 20 m$^2$/g und einem Gehalt an Verunreinigungen < 200 ppm sowie mit 2 Gew.-% SiO$_2$ des Typs Aerosil$^®$ mit einer spezifischen Oberfläche von ca. 80 m$^2$/g und einem Gehalt an Verunreinigungen < 100 ppm versetzt, zu einem Schlicker mit 40 Gew.-% Feststoffgehalt in Isopropanol dispergiert und anschließend in einer Si$_3$N$_4$-ausgekleideten Rührwerks-Kugelmühle mit Si$_3$N$_4$-Mehlkugeln so deagglomeriert und homogenisiert, dass jeweils 1 kg Feststoff eine Mühlenverweildauer von 1 h erfährt. Dieses Aufbereitungsverfahren erfolgte im Durchlauf durch die Mühle, wobei in den äußeren Kreislauf ein Magnetabscheider eingebaut war, der kontinuierlich von dem umgepumpten Schlicker durchströmt wurde. Nach dieser Mahlbehandlung wurde der Schlicker einmal durch einen Feinfilter der Porengröße 50 $\mu$m gepumpt, um unzerstörte größere Agglomerate zu entfernen sowie mit 3 Gew.-% des organischen Binders PVP, gelöst in Isopropanol, versetzt. Dieser Schlicker wurde mittels eines explosionsgeschützten Sprühtrockners bei einer Turmtemperatur von 180°C zu einem freifließenden Granulat getrocknet, das vor der Formgebung noch < 150 $\mu$m abgesiebt wurde, um Grobgranulate und/oder Turmanbackungen abzutrennen.

Aus diesem Granulat wurden durch ein isostatisches Pressverfahren mit Drucken bis 2000 bar Kugelrohlinge für einen Enddurchmesser von 6,350 mm, sowie Formkörper für die spätere Präparation von Prüfkörpern geformt. Diese geformten Teile wurden an Luft bei einer Temperatur von 350°C ausgeheizt. Diese so vorbehandelten Rohlinge wurden, gegebenenfalls nach einer Zwischenbehandlung, in einem 2-stufigen Sinterprozess verdichtet, wobei die erste Stufe bei einer Temperatur von 1700°C unter 2 bar Stickstoff für 1h und die zweite Stufe bei einer Temperatur von 1700°C unter 95 bar $N_2$ für 1h ausgeführt wurde. Es wurde eine theoretische Dichte > 98 % erzielt. In diesem Material wurde ein C-Gehalt von 0,2 Gew.-% und eine maximale C-Partikelgröße von 2,8 $\mu$m analysiert. Die weiteren Ergebnisse der Werkstoff- und Kugelcharakterisierung, letzteres erfolgend nach der Bearbeitung zu einer Präzision besser als G25, sind in Tabelle 1 aufgeführt. Demzufolge erreicht der Werkstoff alle als erfindungsgemäß spezifizierten Kennwerte. Beim spezifizierten Schlagtest treten C-Risse nur in einem Umfang auf, die diesen Werkstoff gemäss den spezifizierten Kriterien als stoßfest qualifizieren. Die Art und Menge von Sinteradditiven, sowie des Sinterverfahrens sind demzufolge zweitrangig, sofern die spezifischen Werkstoffeigenschaften und die Abwesenheit von Defekten größer der spezifizierten Grenzwerte erreicht wird. Der Werkstoff und das Verfahren zu seiner Herstellung sind folglich erfindungsgemäß.

### Beispiel 4a / Si$_3$N$_4$ - 4a

Mit dem in Beispiel 3 verwendeten Si$_3$N$_4$-Pulver wurde unter Zusatz von 5 Gew.-% Y$_2$O$_3$ und 5 Gew.-% Al$_2$O$_3$ ein Sinteransatz aufbereitet, granuliert und zu Werkstoffproben und Kugelrohlingen für einen Enddurchmesser von 12,7 mm geformt, an Luft ausgeheizt und gesintert, wie in Beispiel 3 beschrieben. Dabei wurde allerdings ein 2-stufiger Gasdrucksinterprozess angewandt, bestehend aus einer ersten Stufe bei 1850°C, 10 bar $N_2$ , 1,5 h und einer zweiten Stufe bei 1750°C, 95 bar $N_2$, 1 h, der sich unter dem Aspekt der Vermeidung von optischen Heterogenitäten bewährte. Die resultierenden Eigenschaften und der analysierte C-Gehalt sowie die maximale C-Partikelgröße, aufgeführt in Tabelle 1, zeigen, dass dieser Werkstoff die als erfindungsgemäß spezifizierten Kriterien erreicht. Beim beschriebenen Schlagtest treten C-Risse nur in einem Umfang auf, der diesen Werkstoff als stoßfest gemäss den spezifizierten Kriterien qualifiziert. Der Werkstoff und das Verfahren zu seiner Herstellung sind folglich erfindungsgemäß.

### Beispiel 4b / Si$_3$N$_4$ - 4b (Vergleichsbeispiel)

Im Bestreben, die Sinterdichte des Si$_3$N$_4$ - Werkstoffs, der gemäß Beispiel 4a erhalten wurde, weiter zu steigern und dadurch die Werkstoffeigenschaften zu verbessern, wurde das identische Material unter Steigerung der Bedingungen der zweiten Sinterstufe auf 1800°C, 95 bar bei 3 h Haltezeit gesintert. Wie die in Tabelle 1 aufgeführten Werte zeigen, wirkt sich dies negativ auf die Werkstoffeigenschaften aus. Kritisch ist die Ausbildung großflächiger optischer Heterogenitäten, die für einen Schädigungsumfang beim Schlagtest als verantwortlich gesehen werden, die keine Qualifizierung als stoßfest gemäss den spezifizierten Kriterien dieser Erfindung mehr ermöglichen. Der Werkstoff und das Verfahren zu seiner Herstellung ist demzufolge nicht erfindungsgemäß.

### Beispiel 5 / Si$_3$N$_4$ - 5

Da elektrisch leitfähigere Wälzlagerkomponenten zur Ableitung von Aufladungen von Interesse sind, wird ein derartiger Werkstoff synthetisiert und bezüglich seiner Stoßfestigkeit charakterisiert. Der Ausgangsansatz bestand hierbei aus dem kommerziell verfügbarem Si$_3$N$_4$-Pulver M11 (H.C. Starck), dem 44 Gew.-% TiN (Grade C, H. C. Starck), 8 Gew.-% SiC (UF25, H. C. Starck) sowie 5 Gew.-% Y$_2$O$_3$ (Grade C, H. C. Starck) und 3 Gew.-% Al$_2$O$_3$ (CT 3000 SG, Alcoa) zugesetzt wurden. Dieser Ansatz wurde identisch wie Beispiel 3 aufbereitet, granuliert und zu Werkstoffproben und Kugelrohlingen für einen Enddurchmesser von 12,7 mm geformt und an Luft bei 350°C ausgeheizt. Das Sintern erfolgte identisch den in Beispiel 4 a beschriebenen Bedingungen. Danach wurde ein Gehalt an freiem, ungebundenem Kohlenstoff von 0,4 Gew.-% sowie eine maximale C-Partikelgröße von 4,3 $\mu$m bestimmt. Die resultierenden Werkstoffeigenschaften, aufgeführt in Tabelle 1, zeigen, dass diese den erfindungsgemäßen Kriterien entsprechen. Beim spezifizierten Schlagtest mit endbearbeiteten Kugeln mit einem Durchmesser von 12,7 mm und einer Bearbeitungsqualität besser G25 traten keinerlei Schädigungen auf, so dass dieser Werkstoff als stoßfest zu qualifizieren ist. Der Werkstoff und das Verfahren zu seiner Herstellung sind demzufolge erfindungsgemäß.

### Beispiel 6 / SiAlON (Vergleichsbeispiel)

Mit dem in Beispiel 4 verwendeten Si$_3$N$_4$-Pulver M11 wurde unter Zusatz von 6 Gew.-% Y$_2$O$_3$ und 6 Gew.-% A1N ein Ansatz aufbereitet wie in Beispiel 3 beschrieben, zu Werkstoffproben und Kugelrohlingen für einen Enddurchmesser von 12,7 mm geformt und an Luft bei 350°C ausgeheizt. Das Sintern erfolgte identisch dem in Beispiel 4 a beschriebenen Prozess, der Rest-C-Gehalt wurde mit 0,3 Gew.-% ermittelt Bedingt durch die Wahl der Ausgangspulver, insbesondere durch den Einsatz von AlN, bildete sich ein Anteil von etwa 50 Vol-% einer a-SiAlON-Phase mit bekannt höherer Härte im Vergleich zu β-Si$_3$N$_4$ aus, bestimmt mittels Röntgenbeugungsanalyse. Die resultierenden Werkstoffeigenschaften, aufgeführt in Tabelle 1, zeigen, dass die Härte des Werkstoffes außerhalb des spezifizierten erfindungsgemäßen Bereiches liegt. Bei Ausführung des Schlagtests gemäss der Beschreibung traten Schädigungen der Kugeln in einem Umfang ein, die keine Qualifizierung als stoßfest gemäss den spezifizierten Kriterien dieser Erfindung ermöglichen. Der Werkstoff ist demzufolge nicht erfindungsgemäß.

### Beispiel 7 / Liquid phase sintered (LPS)-SiC (Vergleichsbeispiel)

Kommerziell verfügbare SiC-Pulver der Qualität UF25 von H.C. Starck, Goslar, mit einer spezifischen Oberfläche von 25 m$^2$/g und einem O-Gehalt von 1,6 Gew.-% wurde mit 6 Gew.-% $Y_2O_3$ (H.C. Starck, Grade C) und 3 Gew.-% AIN (H.C. Starck, Grade C) versetzt und zu einem Schlicker mit 40 Gew.-% Feststoffgehalt in Isopropanol dispergiert. Dieser Schlicker wurde in einer $Si_3N_4$-ausgekleideten Rührwerks-Kugelmühle mit $Si_3N_4$-Mahlkugeln, wie für die oben angeführten Beispiele beschrieben, deagglomeriert und homogenisiert, wobei im äußeren Kreislauf der Mühle ein Magnetscheider eingebaut war. Nach der Mahlbehandlung wurde der Schlicker durch einen Feinfilter der Porengröße 50 $\mu$m gepumpt und mit 3 Gew.-% des organischen Binders PVP, gelöst in Isopropanol, versetzt. Dieser Schlicker wurde mittels eines explosionsgeschützten Sprühtrockners bei einer Turmtemperatur von 180°C zu einem freifließenden Granulat getrocknet, das vor der Formgebung noch < 150 $\mu$m abgesiebt wurde. Aus diesem Granulat wurden, wie für die $Si_3N_4$-Beispiele beschrieben, Kugelrohlinge für einen Enddurchmesser von 6,350 mm, sowie Formkörper für die Präparation von Prüfkörpern geformt und diese bei 350°C an Luft ausgeheizt. Das so vorbehandelte Material wurde einer 2-stufigen Gasdruck-Sinterung unterzogen, wobei die erste Sinterstufe bei 1900°C, 1 h, 10 bar $N_2$, die zweite Sinterstufe bei 1850°C und 100 bar Gesamtdruck, bestehend aus 10 bar $N_2$ + 90 bar Ar, 1h in einem Graphit-widerstandsbeheizten Ofen mit Graphitisolation und Graphittiegel ausgeführt wurde. Die theoretische Dichte der gesinterten Teile lag bei über 98 %, der Gehalt an freiem, ungebundenem C bei 0,5 Gew.-%, die maximale C-Partikelgröße betrug 6,5 $\mu$m. Die sonstigen ermittelten Werkstoffeigenschaften unterschieden sich naturgemäß stark von denen der Werkstoffe auf Basis von $Si_3N_4$. Schlagtests an Kugeln, die zu einer Präzision besser als G25 bearbeitet wurden, führten zu einer 100 % Ausbildung von C-Rissen, so dass dieser Werkstoff nicht erfindungsgemäß ist.

### Beispiel 8 / Teilstabilisiertes $ZrO_2$

Ein von der Fa. Tosoh zu beziehendes pressfertiges Granulat zur Herstellung von teilstabilisiertem $ZrO_2$, bestehend aus 97 Mol.-% $ZrO_2$ und 3 Mol.-% $Y_2O_3$, wurde ohne weitere Vorbehandlung durch isostatisches Pressen zu Kugeln und Formkörpern geformt. Diese geformten Teile wurden an Luft bei einer Temperatur von 350°C ausgeheizt und anschließend in einer Graphit-widerstandsbeheizten und Graphit-isolierten heißisostatischen Presse innerhalb eines Graphittiegels einem Sinter-HIP-Zyklus unterzogen. Die Sinterstufe wurde hierbei bei 1500°C, 2 h, 2 bar $N_2$, die HIP-Stufe bei gleicher Temperatur über 1 h bei 1000 bar $N_2$ durchgeführt. Es resultierte ein dunkel gefärbtes, dichtes Material, dessen Werkstoffeigenschaften sich naturgemäß stark von denen der Werkstoffe auf Basis von $Si_3N_4$ oder SiC unterscheiden. Es verblieb ein C-Gehalt von 0,2 Gew.-%, die maximale C-Partikelgröße betrug 2,5 $\mu$m. Ein an Kugeln der Endabmessung 6,350 mm, die zu einer Genauigkeit besser als G25 bearbeitet wurden, ausgeführter Schlagtest gemäß der Spezifikation führte zu keiner Ausbildung von C-Rissen. Demzufolge ist auch dieses Material als erfindungsgemäß anzusehen.

### Beispiel 9: Vergleichswerkstoffe

Hierfür wurden kommerziell verfügbare Kugeln in Lagerqualität besser oder gleich G25 mit einem Durchmesser von 12,7 mm herangezogen. Die in Tabelle 1 dazu aufgeführten Werkstoffeigenschaften sind den Hersteller-Angaben entnommen oder beruhen auf durchgeführten Messungen. Als Beispiel 9 / V1 und V2 werden zwei $Al_2O_3$-Werkstoffe in Form hochpräziser Kugeln getestet, deren Werkstoffeigenschaften sich naturgemäß stark von den vorab beschriebenen Werkstoffen unterscheiden. Insbesondere die elastischen Konstanten und die Härte liegen deutlich höher als dies bei Werkstoffen auf Basis von $Si_3N_4$ der Fall ist. Bei gefügeanalytischen Untersuchungen wurden keine C-Partikel gefunden, der C-Gehalt selbst liegt unter der Nachweisgrenze des eingesetzten Analyseverfahrens von 0,05 Gew.-%. Im spezifizierten Schlagtest wurden beide $Al_2O_3$-Werkstoffe zu 100 % geschädigt.

Als Beispiel 9 / V3 und V4 wurden kommerziell verfügbare $Si_3N_4$-Kugeln getestet. In den Herstellerangaben sind hierfür nicht alle Werkstoff- und Verfahrenskennwerte verfügbar. Von V3 ist bekannt, dass als Sinteradditiv MgO, bei V4 eine Kombination von $Y_2O_3$ und $Al_2O_3$ verwendet wird. V4 enthält zusätzlich eine geringere Konzentration einer feindispersen Ti-C-N-Phase. Die in Tabelle 1 aufgeführte RT-Biegefestigkeit ist Werkstoffdatenblättern entnommen, alle sonstigen Kennwerte wurden, wie in der Beschreibung ausgeführt, bestimmt. Bei gefügeanalytischen Untersuchungen wurden keine C-Partikel gefunden.

Die Ausführung der Schlagtests mit diesen Kugeln führte überraschenderweise bei beiden Varianten zu Schädigungen, die gemäss den spezifizierten Kriterien dieser Erfindung nicht gestatten, diese Werkstoffe als schlagfest zu qualifizieren, Im Falle von V3 dürfte hierfür die hohe Härte, im Falle von V4 die geringe Dichte und die Anwesenheit optischer Heterogenitäten verantwortlich sein, neben den in beiden Varianten nicht vorhanden C-Partikeln in spezifizierter Menge und Größe.

Unabhängig davon, ob diese Erklärungen zutreffend sind oder nicht, bestätigen diese Ergebnisse die dieser Erfindung zugrundeliegende Erkenntnis, dass ein keramischer Werkstoff mit verbesserter Schlagfestigkeit vorzugsweise keine makroskopischen Defekte und optische Heterogenitäten größer den spezifizierten Abmessungen aufweisen darf, andererseits eine spezielle Kombination von Werkstoffkennwerten aufweisen muss, gekennzeichnet insbesondere durch Unterschreiten von Maximalwerten der Härte und elastischen Konstanten.

**Tabelle1: Werkstoffkennwerte und Ergebnisse des Schlagtests**

| | | | | | | | | | | | | | | | | Testergeb-nisse: | | |
| Bsp-Nr.: | Pulver* | Sinterhilfsmittel | Zusätze | Sinter-prozess | Sinter-dichte | Th. Dichte | C-Gehalt | Max. C-Partikel-größe | RT-BF | Kic | Härte | E-Modul | Poisson-zahl | Kugel-Ø | Defekte* | Anzahl C-Risse | | Erfindungs-gemäß ? |
| | | | | | g/cm³ | % | Gew.-% | $\mu$m | MPa | MPa m 1/2 | GPa | GPa | | mm | | (n von12) | % | |
| Bsp.1, SN-1a | SN-I | Y2O3, Al2O3 | TiN | S-HIP | 3,233 | 99,2 | 0,3 | 3,8 | 870 | 6,4 | 15,1 | 290 | 0,275 | 12,700 | Makrodef. | 7 | 58 | nein |
| Bsp.1, SN-1b | SN-I | Y2O3, Al2O3 | TiN | S-HIP | 3,238 | 99,3 | 0,3 | 3,6 | 1050 | 6,5 | 15,2 | 297 | 0,274 | 12,700 | - | 2 | 17 | ja |
| Bsp.1, SN-1c | SN-I | Y2O3, Al2O3 | TiN | S-HIP | 3,237 | 99,3 | 0,9 | 4,7 | 1020 | 6,6 | 15,0 | 294 | 0,273 | 12,700 | - | 0 | 0 | ja |
| Bsp.2, SN-2 | SN-D | Y2O3, Al2O3 | TiN | S-HIP | 3,238 | 99,0 | 0,4 | 4,2 | 900 | 5,8 | 14,8 | 295 | 0,275 | 12,700 | - | 5 | 42 | ja |
| Bsp.3, SN-3 | SN-G | MgO, Al2O3,SiO2 | - | GDS | 3,158 | 99,8 | 0,2 | 2,8 | 850 | 6,2 | 15,2 | 298 | 0,271 | 6,350 | - | 3 | 25 | ja |
| Bsp.4, SN-4a | SN-G | Y2O3, Al2O3 | - | GDS | 3,230 | 99,6 | 0,2 | 2,7 | 965 | 6,5 | 14,8 | 302 | 0,274 | 12,700 | - | 4 | 33 | ja |
| Bsp.4, SN-4b | SN-G | Y2O3, Al2O3 | - | GDS | 3,217 | 99,4 | 0,2 | n.b. | 920 | 6,3 | 14,9 | 289 | .0,274 | 12,700 | Opt. Het. | 7 | 58 | nein |
| Bsp.5, SN-5 | SN-D | Y2O3, Al2O3 | TiN, SiC | GDS | 3,845 | 98,7 | 0,4** | 4,3 | 775 | 5,8 | 15,2 | 326 | 0,252 | 12,700 | - | 0 | 0 | ja |
| Bsp.6, SiAlON | SN-D | Y2O3, AIN | - | GDS | 3,249 | 99,8 | 0,3 | 3,7 | 880 | 6,3 | 17,1 | 318 | 0,266 | 12,700 | - | 7 | 58 | nein |
| Bsp.7, LPS-SiC | SiC-UF | Y2O3, Al2O3 | - | GDS | 3,237 | 98,4 | 0,5** | 6,5 | 550 | 4,5 | 19,5 | 445 | 0,165 | 6,350 | - | 12 | 100 | nein |

EP 1 529 021 B1

15

(fortgesetzt)

**Tabelle1: Werkstoffkennwerte und Ergebnisse des Schlagtests**

| | Pulver* | Sinterhilfsmittel | Zusätze | Sinter-prozess | Sinter-dichte | Th. Dichte | C-Gehalt | Max. C-Partikel-größe | RT-BF | Kic | Härte | E-Modul | Poisson-zahl | Kugel-Ø | Defekte* | Testergeb-nisse: Anzahl C-Risse | | Erfindungs-gemäß ? |
|---|---|---|---|---|---|---|---|---|---|---|---|---|---|---|---|---|---|---|
| Bsp-Nr.: | | | | | g/cm$^3$ | % | Gew.-% | $\mu$m | MPa | MPa m 1/2 | GPa | GPa | | mm | | (n von12) | % | |
| Bsp.8, ZrO2 | ZrO2-Y | Y2O3 | - | S-HIP | 6,050 | 97,9 | 0,2 | 2,5 | 1200 | 10,0 | 12,0 | 205 | 0,300 | 6,350 | - | 0 | 0 | ja |
| Vergleiche: | | | | | | | | | | | | | | | | | | |
| Bsp.9, V1 | unbekannt | | | | 3,847 | 96,7 | <0,05 | 0 | 500 | n.b.# | 15,7 | 357 | 0,230 | 12,700 | - | 12 | 100 | nein |
| Bsp.9, V2 | unbekannt | | | | 3,892 | 97,8 | <0,05 | 0 | 310 | n.b.# | 17,0 | 370 | 0,230 | 12,700 | - | 12 | 100 | nein |
| Bsp.9, V3 | SN-? | MgO | ? | C-HIP | 3,164 | unbek. | <0,1 | 0 | 980 | 6,0 | 16,2 | 310 | 0,269 | 12,700 | - | 12 | 100 | nein |
| Bsp.9, V4 | SN-I | Y2O3, Al2O3 | Ti-C-N | C-HIP ? | 3,233 | unbek. | <0,1** | 0 | 900 | 6,2 | 15,0 | 296 | 0,275 | 12,700 | Opt. Het. | 12 | 100 | nein |
| | *:SN-I= SN-Pulver nach Imid-Verfahren | | | | **: nur freier Kohlenstoff | | | # : n.b.= nicht bestimmt | | | | *: Makrodef.= makroskopische Defekte >20 um | | | | | | |
| | SN-D=SN-Pulver aus Direktnitridierung | | | | | | | | | | Opt.Het= optische Herterogenitäten >50um | | | | | | |
| | SN-G= SN-Pulver aus Gasphasenverfahren | | | | | | | | | | | | | | | | |

EP 1 529 021 B1

**Patentansprüche**

1. Keramischer Werkstoff auf Basis von Siliciumnitrid oder Zirkondioxid, **dadurch gekennzeichnet, dass** er eine Härte HV10 von maximal 15,5 GPa, einen E-Modul bei Raumtemperatur von kleiner 330 GPa, eine RT-Biegefestigkeit von mindestens 750 MPa, eine Bruchzähigkeit von mindestens 5,5 MPa m$^{1/2}$ und bei 25°C eine Poisson-Zahl bzw. Querkontraktionszahl von $\leq$ 0,3 aufweist und der Werkstoff keine makroskopischen Defekten größer als 20 $\mu$m und/oder optischen Heterogenitäten größer als 50 $\mu$m aufweist und 0,2 bis 5 Gew.-% Kohlenstoffpartikel enthält, wobei die Kohlenstoffpartikel eine maximale Partikelgröße von 5 $\mu$m aufweisen.

2. Keramischer Werkstoff gemäß Anspruch 1, **dadurch gekennzeichnet, dass** der Gehalt an 17-ohlcnstoffpartikcln 0,2 bis 3 Gew.-% beträgt.

3. Keramischer Werkstoff gemäß eines der Ansprüche 1 bis 2, **dadurch gekennzeichnet, dass** es sich um einen Werkstoff auf Basis von Siliciumnitrid handelt und der Werkstoff zusätzlich Carbid-, Nitrid-, Carbonitrid-, Borid- und/oder Silicid-Verbindungen von Elementen der Gruppen des Periodensystems IVB, VB, VIB, des Siliziums und/oder des Eisens aufweist, wobei deren maximale Größe 10 $\mu$m nicht übersteigt und deren maximale Konzentration < 50 Vol.-% beträgt.

4. Verfahren zur Herstellung eines keramischen Werkstoffs gemäss eines der Ansprüche 1 bis 3, **dadurch gekennzeichnet, dass** als Rohstoffe Si$_3$N$_4$-Pulver und Sinterhilfsmittel, gegebenenfalls unter Zusatz eines Dispergierhilfsmittels zu einem Schlicker verarbeitet werden, der Schlicker nassvermahlen wird, zur Vermeidung der Bildung makroskopischer Defekte größer als 20 $\mu$m und/oder optischer Heterogenitäten größer als 50 $\mu$m die beim Nassmahlen entstehende Suspension, über einen Magnetabscheider und ein Feinsieb/Feinfilter mit maximaler Sieböffnung/Filteiporengröße von 50 $\mu$m abgesiebt wird, dem Schlicker als organische Zusätze Polyacrylatc, Polyvinylalkohole, Polyglycole und/oder Polyvinylpyrrolidon zugesetzt werden, die entstehende Mischung anschließend einer Trocknung und Granulierung und einer Formgebung unterzogen wird, wobei die Trocknung bei Temperaturen kleiner 200°C erfolg, anschließend die organischen Zusätze bei Temperaturen zwischen 100 und 400°C für eine Dauer von 0,5 bis 4 h an Luft oder zwischen 100 und 800°C für eine Dauer von 0,5 bis 4h in inerter Atmosphäre oder im Vakuum ausgeheizt und schließlich der entstehende ausgeheizte Formkörper in einem zweistufigen Prozess gesintert wird, wobei der Formkörper in der ersten Stufe für 0,5 bis 5 h bei einer Temperatur von bis 2000°C und einem N$_2$- oder Inertgas-Druck von 1 bis 50 bar und in der zweiten Stufe für 0,5 bis 2,5 h bei einer Temperatur von bis 2000°C und einem N$_2$- oder Inertgas-Druck von 50 bis 2500 bar behandelt wird, wobei es zur Ausscheidung von Kohlenstoffpartikeln kommt und keine makroskopischen Defekte größer als 20 $\mu$m und/oder optischen Heterogenitäten größer als 50 $\mu$m gebildet werden.

5. Verfahren zur Herstellung eines keramischen Werkstoffs gemäß eines der Anspruch 1 oder 2, **dadurch gekennzeichnet, dass** als Rohstoffe ZrO$_2$-pulver und Sinterhilfsmittel, gegebenenfalls unter Zusatz eines Dispergierhilfsmittels zu einem Schlicker verarbeitet werden, der Schlicker nassvermahlen wird und dem Schlicker als organische Zusätze Polyacrylate, Polyvinylalkohole, Polyglycole und/oder Polyvinylpyrrolidon zugesetzt werden, die entstehende Mischung anschließend einer Trocknung und Granulierung und einer Formgebung unterzogen wird, wobei die Trocknung bei Temperaturen kleiner 250°C erfolgt, anschließend die organischen Zusätze bei Temperaturen zwischen 100 und 400°C für eine Dauer von 0,5 bis 4 h an Luft oder zwischen 100 und 800°C für eine Dauer von 0,5 bis 4h in inerter Atmosphäre oder im Vakuum ausgeheizt und schließlich der entstehende ausgeheizte Formkörper in einem zweistufigen Prozess gesintert wird, wobei der Formkörper in der ersten Stufe für 0,5 bis 5 h bei einer Temperatur von bis 1700°C und einem N$_2$- oder Inertgas- Druck von 1 bis 50 bar und in der zweiten Stufe für 0,5 bis 2,5 h bei einer Temperatur von bis 1700°C und einem N$_2$- oder Inertgas-Druck von 50 bis 2500 bar behandelt wird.

6. Verwendung eines keramischen Werkstoffs gemäß eines der Ansprüche 1 bis 5 als Wälzkörper in Lagern sowie sonstigen stoßbeanspruchten Bauteilen sowie geformten Gegenständen.

**Claims**

1. Ceramic material based on silicon nitride or zirconium dioxide, **characterized in that** it has an HV10 hardness of not more than 15.5 GPa, a modulus of elasticity at room temperature of less than 330 GPa, an RT flexural strength of at least 750 MFa, a fracture toughness of at least 5.5 MPa m$^{1/2}$ and, at 25 °C, a Poisson ratio or transverse contraction ratio of $\leq$ 0.3, and the material has no macroscopic defects larger than 20 $\mu$m and/or optical heterogeneities larger than 50 $\mu$m, and contains 0.2 to 5% by weight of carbon particles, where the carbon particles have a maximum particle size of 5 $\mu$m.

2. Ceramic material according to Claim 1, **characterized in that** the content of carbon particles is 0.2 to 3% by weight.

3. Ceramic material according to either of Claims 1 and 2, **characterized in that** the material is based on silicon nitride and additionally comprises carbide, nitride, carbonitride, boride and/or silicide compounds of elements of groups IVB, VB, VIB of the Periodic Table, of silicon and/or of iron, where the maximum size thereof does not exceed 10 $\mu$m and the maximum concentration thereof is < 50° by volume.

4. Process for producing a ceramic material according to any of Claims 1 to 3, **characterized in that**, as raw materials, $Si_3N_4$ powder and sintering aids, optionally with addition of a dispersing aid, are processed to give a slip, the slip is wet-ground, the formation of macroscopic defects larger than 20 $\mu$m and/or of optical heterogeneities larger than 50 $\mu$m is avoided by screening off the suspension formed in the course of wet grinding using a magnetic separator and a fine screen/fine filter with a maximum screen orifice/filter pore size of 50 $\mu$m, polyacrylates, polyvinyl alcohols, polyglycols and/or polyvinylpyrrolidone are added as organic additives to the slip, then the resulting mixture is subjected to drying and granulation and shaping, the drying being effected at temperatures less than 200°C, then the organic additives are baked out at temperatures between 100 and 400°C under air for a period of 0.5 to 4 h, or between 100 and 800°C in an inert atmosphere or under reduced pressure for a period cf 0.5 to 4 h, and finally the resulting baked-out mouldings is sintered in a two-stage process, the moulding being treated in the first stage at a temperature of up to 2000°C and an $N_2$ or inert gas pressure of 1 to 50 bar for 0.5 to 5 h, and in the second stage at a temperature of up to 2000°C and an $N_2$ or inert gas pressure of 50 to 2500 bar for 0.5 to 2.5 h, in the course of which carbon particles are separated out and no macroscopic defects larger than 20 $\mu$m and/or optical hetero-geneities larger than 50 $\mu$m are formed.

5. Process for producing a ceramic material according to either of Claims 1 and 2, **characterized in that**, as raw material, $ZrO_2$ powder and sintering aids, optionally with addition of a dispersing aid, are processed to give a slip, the slip is wet-ground, and polyacrylates, polyvinyl alcohols, polyglycols and/or polyvinylpyrrolidone are added as organic additives to the slip, the resulting mixture is subsequently subjected to drying and granulation and shaping, the drying being effected at temperatures less than 250°C, then the organic additives are baked out at temperatures between 100 and 400°C for a period of 0.5 to 4 h under air, or between 100 and 800°C for a period of 0.5 to 4 h in an inert atmosphere or under reduced pressure, and the resulting baked-out mouldings are finally sintered in a two-stage process, the moulding being treated in the first stage at a temperature of up to 1700°C and an $N_2$ or inert gas pressure of 1 to 50 bar for 0.5 to 5 h, and in the second stage at a temperature of up to 1700°C and an $N_2$ or inert gas pressure of 50 to 2500 bar for 0.5 to 2.5 h.

6. Use of a ceramic material according to any of Claims 1 to 5 as roller bodies in bearings and other components subject to impact stress, and also shaped articles.

**Revendications**

1. Matériau céramique à base de nitrure de silicium ou de dioxyde de zirconium, **caractérisé en ce qu'**il présente une dureté HV10 d'au plus 15,5 GPa, un module d'élasticité à température ambiante inférieur à 330 GPa, une résistance à la flexion à TA d'au moins 750 MPa, une ténacité à la rupture d'au moins 5,5 MPa m$^{1/2}$ et un coefficient de Poisson ou coefficient de contraction perpendiculaire à 25 °C $\leq$ 0,3, et **en ce que** le matériau ne présente aucun défaut macroscopique d'une taille supérieure à 20 $\mu$m et/ou aucune hétérogénéité optique d'une taille supérieure à 50 $\mu$m, et contient 0,2 à 5 % en poids de particules de carbone, les particules de carbone présentant une taille de particule maximale de 5 $\mu$m.

2. Matériau céramique selon la revendication 1, **caractérisé en ce que** la teneur en particules de carbone est de 0,2 à 3 % en poids.

3. Matériau céramique selon l'une quelconque des revendications 1 à 2, **caractérisé en ce qu'**il s'agit d'un matériau à base de nitrure de silicium et **en ce que** le matériau comporte également des composés de carbure, nitrure, carbonitrure, borure et/ou siliciure d'éléments des groupes IVB, VB, VIB du tableau périodique, de silicium et/ou de fer, leur taille maximale ne dépassant pas 10 $\mu$m et leur concentration maximale étant < 50 % en volume.

4. Procédé de fabrication d'un matériau céramique selon l'une quelconque des revendications 1 à 3, **caractérisé en**

**ce qu'**une poudre de Si$_3$N$_4$ et un adjuvant de frittage en tant que matières premières sont travaillés en une pâte en ajoutant éventuellement un adjuvant de dispersion, la pâte est broyée à l'état humide, pour éviter la formation de défauts macroscopiques d'une taille supérieure à 20 $\mu$m et/ou d'hétérogénéités optiques d'une taille supérieure à 50 $\mu$m, la suspension formée lors du broyage humide est tamisée sur un séparateur aimanté et un tamis fin/filtre fin ayant une ouverture de maille/taille de pore du filtre maximale de 50 $\mu$m, des polyacrylates, des alcools polyvinyliques, des polyglycols et/ou de la polyvinylpyrrolidone sont ajoutés en tant qu'additifs organiques à la pâte, le mélange formé est ensuite soumis à un séchage, une granulation et un façonnage, le séchage ayant lieu à des températures inférieures à 200 °C, puis les additifs organiques sont portés à des températures comprises entre 100 et 400 °C pendant une durée de 0,5 à 4 h dans l'air, ou comprises entre 100 et 800 °C pendant une durée de 0,5 à 4 h dans une atmosphère inerte ou dans le vide, et le corps moulé chauffé formé est enfin fritté par un procédé à deux étapes, le corps moulé étant traité lors de la première étape pendant 0,5 à 5 h à une température pouvant atteindre 2 000 °C et à une pression de N$_2$ ou de gaz inerte de 1 à 50 bar et lors de la seconde étape pendant 0,5 à 2,5 h à une température pouvant atteindre 2 000 °C et à une pression de N$_2$ ou de gaz inerte de 50 à 2 500 bar, la précipitation de particules de carbone ayant lieu et aucun défaut macroscopique d'une taille supérieure à 20 $\mu$m et/ou aucune hétérogénéité optique d'une taille supérieure à 50 $\mu$m n'étant formé.

5. Procédé de fabrication d'un matériau céramique selon l'une quelconque des revendications 1 ou 2, **caractérisé en ce qu'**une poudre de ZrO$_2$ et un adjuvant de frittage en tant que matières premières sont travaillés en une pâte en ajoutant éventuellement un adjuvant de dispersion, la pâte est broyée à l'état humide, et des polyacrylates, des alcools polyvinyliques, des polyglycols et/ou de la polyvinylpyrrolidone sont ajoutés en tant qu'additifs organiques à la pâte, le mélange formé est ensuite soumis à un séchage, une granulation et un façonnage, le séchage ayant lieu à des températures inférieures à 250 °C, puis les additifs organiques sont portés à des températures comprises entre 100 et 40C °C pendant une durée de 0,5 à 4 h dans l'air, ou comprises entre 100 et 800 °C pendant une durée de 0,5 à 4 h dans une atmosphère inerte ou dans le vide, et le corps moulé chauffé formé est enfin fritté par un procédé à deux étapes, le corps moulé étant traité lors de la première étape pendant 0,5 à 5 h à une température pouvant atteindre 1 700 °C et à une pression de N$_2$ ou de gaz inerte de 1 à 50 bar et lors de la seconde étape pendant 0,5 à 2,5 h à une température pouvant atteindre 700 °C et à une pression de N$_2$ ou de gaz inerte de 50 à 2 500 bar.

6. Utilisation d'un matériau céramique selon l'une quelconque des revendications 1 à 5 en tant que corps roulant dans des paliers et autres éléments de construction sollicités par des impacts, ainsi qu'en tant qu'objets façonnés.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11043372 A
- JP 2180754 A
- DE 4422566
- US 2001027681 A
- US 4205033 A
- US 5902761 A
- US 5508241 A

**In der Beschreibung aufgeführte Nicht-Patentliteratur**

- **von Hadfield.** Failure of Silicon Nitride Rolling Elements with Ring Crack Defekts. *Ceramics International,* vol. 24, 379-386
- **von Cundill.** Impact Resistance of Silicon Nitride Balls. *Proc. 6th Int. Symp. on Ceramic Materials and Components for Engines,* 1997, 556-561
- **J. Kübler.** Fracture Toughness of Ceramics using SEVNB Method: Round Robin. *VAMAS Report Nr. 37,* ISSN 1016-2186
- **Munz, D.** Mechanisches Verhalten keramischer Werkstoffe. Springer Verlag, 1989
- **A. Migliori ; J. L. Sarrao ; William M. Visscher ; T. M. Bell ; Ming Lei ; Z. Fisk ; R. G. Leisure.** Resonant Ultrasound Spectroscopic Techniques for Measurement of the Elastic Moduli of Solids. *Physica,* 1993, vol. B 1, 183